# EUROPEAN PATENT SPECIFICATION

(11) **EP 2 472 252 B1**
(45) Date of publication and mention of the grant of the patent: **20.11.2013**
(21) Application number: 11195865.8
(22) Date of filing: 28.12.2011
(51) Int. Cl.: G01N 23/20

(54) **Portable x-ray diffractometer**
Portables Röntgendiffraktometer
Diffractomètre de rayons X portable

(30) Priority: 28.12.2010 IT VI20100351
(43) Date of publication of application: 04.07.2012
(73) Proprietor: Fondazione Bruno Kessler, 38122 Trento (IT); TNX S.r.l., 38123 Trento (IT)
(72) Inventor: Deflorian, Corrado, 38122 Trento (IT); Marconi, Gian Paolo, 25080 Puegnago Sul Garda (BS) (IT)
(74) Representative: Bonini, Ercole

(56) References cited:
- EP-A1- 2 112 505
- DE-B1- 2 633 114
- JP-A- 6 313 757
- US-A- 3 728 541
- US-A- 4 071 758

## Description

The invention concerns a new improved X-ray diffractometer, preferably of the portable type, for determining the residual stresses in polycrystalline materials subjected to analysis.

It is known that X-ray diffractometry is a consolidated experimental technique which allows the structure and microstructure of materials to be analysed. Said technique consists in irradiating a sample with a beam of X-rays generated by a source unit, the same beam being reflected by the sample and acquired by a detector unit.

It is also known that in order to be able to exploit said technique various types of instruments have been developed, generically called X-ray diffractometers, which have different constructional and functional characteristics, see e.g. EP 2 112 505 A1.

In the specific case of X-ray diffractometers for determining residual stresses, the operating mode requires that the source unit and the detector unit be moved integrally, in such a way as to vary the observation angle (Ψ) with respect to the sample to be analysed.

In general, on the other hand, in conventional diffractometers the source unit and the detector unit can also move independently of each other, thus increasing the possible alternative configurations the X-ray diffractometers can assume for the sample analysis.

In most cases, the X-ray diffractometers of the known art are installed permanently in the lab, in which case the sample to be analysed is arranged in a suitable housing under the source unit and the detector unit.

However, in order to be able to use the X-ray diffractometers in the so-called "lab" version, it is necessary that the sample to be analysed has such dimensions that allow it to be transported and arranged in the so-called housing and, in particular, it is necessary that said sample can be disassembled and removed from its normal operating position.

Actually, in many situations it is not possible to remove the sample to be analysed from its operating position and therefore it is not possible to use the above mentioned "lab" version of the X-ray diffractometer to analyse said sample.

For example, if it is necessary to assess the level of residual stresses in a welding point of two trestles belonging for example to a bridge or railway arch, said trestles cannot be removed and transported to the lab to carry out the analysis.

In these situations, therefore, it is necessary to have "portable" diffractometers, in order to be able to carry out the analysis on site.

An example of a portable X-ray diffractometer for the analysis of residual stresses is found in DE 2633114 B1.

Said portable X-ray diffractometers are smaller and lighter than the lab instruments, which allows them to be easily transported and positioned for the execution of the analysis on the sample.

In particular, one of the portable X-ray diffractometers for the determination of residual stresses that is most known in the market has a supporting structure comprising a curved guide along which a supporting carriage on which the source unit and the detector unit are fixed can move.

In order to allow the movement of the supporting carriage along the above mentioned curved guide, the latter is provided, at the level of one of its edges, with a rack cooperating with a pinion that in turn is connected to the revolving shaft of an electric motor fixed to the same supporting carriage.

In particular, the revolving shaft of said electric motor is arranged so that it is essentially orthogonal with respect to the curved guide, in order to allow, in fact, the cooperation between pinion and rack.

According to said configuration, therefore, the supporting carriage, the source unit and the detector unit, the electric motor and the pinion move together along the curved guide, so as to vary their position with respect to the sample subjected to analysis.

However, the portable X-ray diffractometer of the known art just described and in general all portable X-ray diffractometers pose several drawbacks.

A first drawback lies in that the cooperation between rack and pinion is subjected to mechanical movements that tend to reduce measurement precision.

In particular, said type of mechanical solution does not make it possible to obtain a smooth and constant movement of the supporting carriage and of the driving unit along the curved guide.

Consequently, the analysis of the sample performed using said type of portable X-ray diffractometers of the known art cannot give precise and repeatable results.

Furthermore, using mechanical elements like rack and pinion to activate the movement of the supporting carriage along the curved guide contributes to generating friction phenomena which over time cause wear and cyclical motion faults, thus considerably worsening the performance of the entire X-ray diffractometer.

A further drawback posed by this X-ray diffractometer of the known art is determined by the fact that moving the motor together with the supporting carriage and the source and detector units may cause unbalance and undesired movements of the same diffractometer, consequently reducing the precision of the results obtained from the analysis of the sample.

Finally, the drawback that most of all determines the non- universality of use of said X-ray diffractometers and thus their limited diffusion is the direct consequence of their size and overall dimensions, which are not negligible even if limited in comparison with the lab diffractometers described above. Regarding, in this specific case, the portable X-ray diffractometer of the known art described above, its considerable overall dimensions are due, as already mentioned, to the fact that the electric motor is arranged with its revolving shaft orthogonal to the curved guide.

The reason why the size and overall dimensions of portable X-ray diffractometers are determinant for their universality of use and therefore for their success lies in that, very often, the sample that must be analysed on site are located in almost inaccessible positions, that is, the free movement space around them is quite limited due to the presence of other elements that make up the same complex structure.

For example, if it is necessary to analyse the level of residual stresses in a specific point of a blade belonging to a turbine, the space available around the above mentioned blade for introducing the portable X-ray diffractometer is quite limited, due to the presence of the adjacent blades.

For this reason said introduction would be quite difficult, if not impossible, with the consequent infeasability of the sample analysis.

The present invention aims to overcome the drawbacks listed above.

In particular, it is the object of the invention to provide a portable X-ray diffractometer whose size and overall dimensions are reduced compared to the X-ray diffractometers of the known art, so that they can be used for on-site applications even in conditions of limited space.

A further object of the present invention is to provide a portable X-ray diffractometer ensuring higher precision and repeatability of the movements of the source unit and detector unit with respect to the sample.

Consequently, it is the object of the invention to provide a portable X-ray diffractometer that makes it possible to obtain much more precise and constant measurements compared to the X-ray diffractometers of the known art.

Finally, it is a further object of the invention to provide an X-ray diffractometer essentially made up of components normally available and easy to find on the market, so as to reduce its costs.

The objects described above are achieved by a portable X-ray diffractometer having the characteristics illustrated in the main claim.

Further characteristics of the X-ray diffractometers are described in the dependent claims.

Advantageously, the more compact structure of the X-ray diffractometer of the invention and consequently its limited weight make it easier to be transported to the analysis site by the technicians in charge with carrying out the measurements.

A further advantage, due to the choice to use components available on the market for making the X-ray diffractometer of the invention, is represented by the quicker and easier service or maintenance operations on the diffractometer.

Still advantageously, the special structure of the X-ray diffractometer of the invention makes it possible to maintain the area dedicated to the positioning of the sample to be analysed completely clear, so as to allow the analysis of multiple types of samples, even of considerable size, to be performed.

Finally, a further advantage, due to the particular configuration of the X-ray diffractometer of the invention, lies in its more silent operation compared to the diffractometers of the known art.

The objects and advantages described above will be highlighted in greater detail in the description of a preferred embodiment of the invention that is provided as an indicative, non-limiting example, with reference to the enclosed drawings, wherein:
- Figure 1 schematically shows a front view of the X-ray diffractometer that is the subject of the invention;
- Figure 2 schematically shows an axonometric view of the X-ray diffractometer, in which the supporting structure is not represented and in which the supporting carriage and the drive element are in a first operating position;

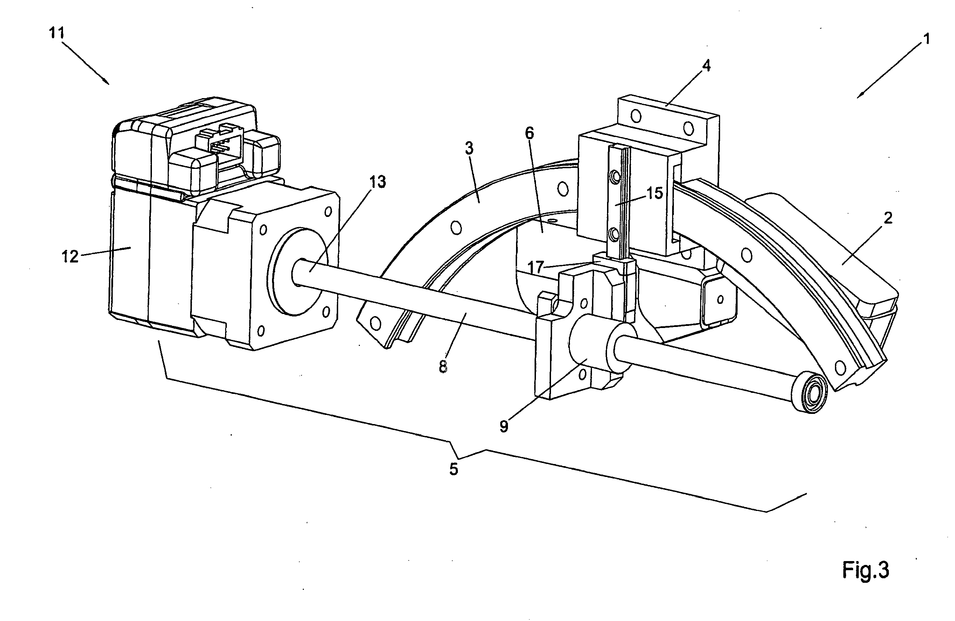

- Figure 3 schematically shows an axonometric view of the X-ray diffractometer, in which the supporting structure is not represented and in which the supporting carriage and the drive element are in a second operating position;
- Figure 4 schematically shows an axonometric view of the X-ray diffractometer, in which the supporting structure is not represented and in which the supporting carriage and the drive element are in a third operating position;
- Figure 5 schematically shows a top view of the X-ray diffractometer that is the subject of the invention, in which the supporting structure is not represented;
- Figure 6 schematically shows in detail the articulation means of the X-ray diffractometer that is the subject of the invention.

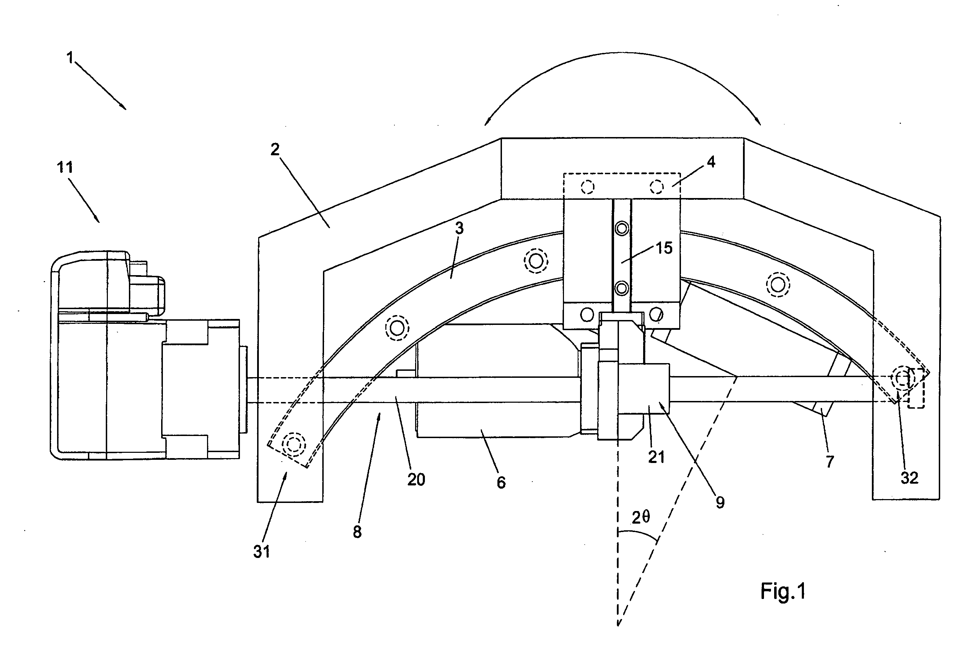

The X-ray diffractometer of the invention for the determination of the residual stresses in samples subjected to analysis is shown in Figure 1, where it is indicated as a whole by **1.**

Preferably but not necessarily, the X-ray diffractometer **1** of the invention is of the portable type.

It is not excluded, however, that said X-ray diffractometer **1** of the invention **can** be incorporated in a lab structure.

As shown in Figure 1, the X-ray diffractometer of the invention comprises a supporting structure **2** in which it is possible to identify a curved guide **3** in the shape of an arc of a circle, along which a supporting carriage **4** is slidingly constrained.

In particular, in the preferred embodiment of the invention the supporting carriage **4** is coupled with the curved guide **3** by means of a system of recirculating balls.

It is not excluded, however, that in alternative embodiments the movement of the supporting carriage **4** along the curved guide **3** can be obtained through an alternative system to that with recirculating balls, provided that it belongs to the known art.

The X-ray diffractometer **1** also comprises a driving unit, indicated by **5** in Figures from 2 to 4, which allows the movement of the above mentioned supporting carriage **4** along the curved guide **3**.

As can be observed always in Figure 1, the supporting carriage **4** is suited to support in a stable manner a source unit **6** of X-rays and a detector unit **7** of the same X-rays diffracted by the sample subjected to analysis.

In particular, the above mentioned two units **6** and **7** are suited to move along the curved guide **3,** as indicated by the arrow in Figure 1, with respect to the point at the height of which the sample to be analysed is arranged.

With regard to the preferred embodiment of the X-ray diffractometer **1** of the invention for measuring residual stresses, the source unit **6** and the detector unit **7** are mutually arranged on said supporting carriage **4** so that the incident beam and the diffracted beam form an angle **2**θ, indicated in Figure 1, that depends on the type of material analysed.

The source unit **6** and the detector unit **7** move together along the curved guide **3** and around the sample in order to allow the latter to be observed from various angles.

It is not excluded that in alternative embodiments, as is better explained below, the X-ray diffractometer **1** is provided with two supporting carriages **4**, each one of which supports one of the two source **6** and detector **7** units with the possibility to move independently along the above mentioned curved guide **3** over a limited and predetermined length.

In particular, a first supporting carriage may move over half of the extension of **the** curved guide **3** and the other supporting carriage may move over the remaining half.

In this way, the X-ray diffractometer **1** of the invention would be capable of performing other types of diffractometric analyses in addition to the measurement of the residual stresses.

Going back to the description of the preferred embodiment of the X-ray diffractometer **1**, according to the invention the above mentioned driving unit **5** comprises a driving bar **8**, of the linear type, which is essentially arranged between the opposite ends **31** and **32** of a chord of the curved guide **3**, as shown in Figure 1.

**This** position of the driving bar **8** with respect to the curved guide **3** is permanent.

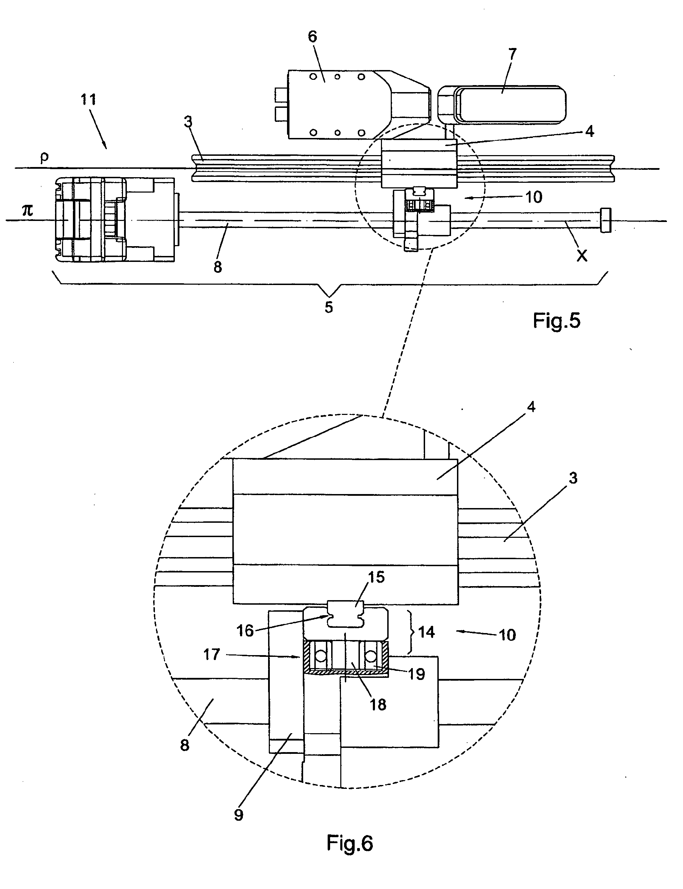

Furthermore, as can be seen in Figure 5, said driving bar **8** defines a longitudinal axis **x** that lies on a plane π essentially parallel to the plane p defined by the same curved guide **3**.

As can be seen always in Figure 1, a drive element **9** that can move essentially along the entire extension of the driving bar **8** is slidingly constrained to said driving bar **8**.

In its turn, as shown always in Figure 5 and as will be explained in detail below, said drive element **9** is operatively associated with the supporting carriage **4** through articulation means **10**, so as to allow the linear motion of the same drive element **9** to be transformed into the curved motion of the supporting carriage **4** determined by the curved guide **3.**

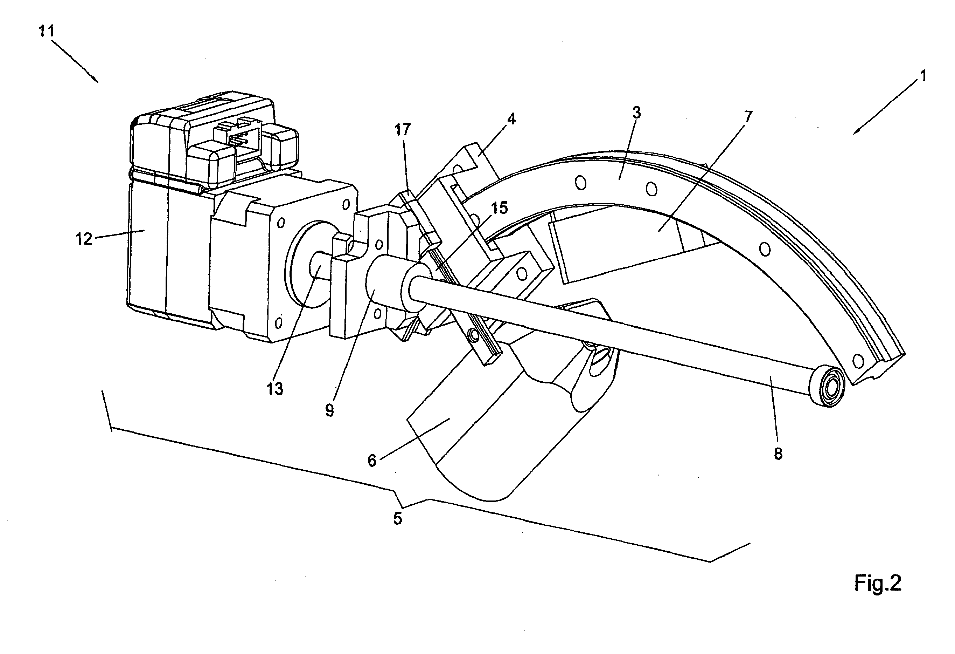

Finally, in order to allow the movement of the drive element **9** on the driving bar **8**, a first end of the same driving bar **8** is associated with power means **11** that in the preferred embodiment of the invention comprise an electric motor **12** and a rotary shaft **13** coaxially connected to the driving bar **8**, as indicated in Figure 2.

It is clear that said configuration makes it possible to considerably reduce the size and overall dimensions of the X-ray diffractometer **1** of the invention compared to the diffractometers of the known art, thus allowing one of the main objects of the invention to be achieved.

Regarding the articulation means **10**, they include rotation-translation means for the translation and simultaneous rotation of the supporting carriage **4** with respect to the drive element **9**.

Said rotation movement associated with the translation movement allows said supporting carriage **4** to move along the curved guide **3** when the drive element **9** is set moving along the longitudinal axis **x** of the driving bar **8** through said power means **11.**

Preferably but not necessarily, said rotation-translation means, as shown in Figure 5 and in the detail of Figure 6, include slide means **14** comprising a linear guide **15** operatively associated with a slit **16.**

Said slide means **14** are components generally available on the market, therefore using them makes it possible to achieve one of the objects of the present invention consisting, in fact, in the construction of an X-ray diffractometer essentially made up of components available on the market. However, it is not excluded that in different embodiments, not described and not illustrated herein, said rotation-translation means may comprise other elements different from the slide means **14**, provided that they allow the translation and simultaneous rotation of the supporting carriage **4** with respect to the drive element **9**.

Figures from 2 to 4 show three possible arrangements of the supporting carriage **4** along the curved guide **3** and the corresponding three positions of the drive element **9** along the driving bar **8**, which can be obtained thanks to the presence of the above mentioned rotation-translation means.

In detail, as can be observed always in Figure 6, according to the preferred embodiment described herein the linear guide **15** projects from the supporting carriage **4** and the corresponding slit **16** is defined in the drive element **9.**

In greater detail, according to said embodiment of the invention the slit 16 is created in a section element **17** rotatingly associated with the above mentioned drive element **9** through a pin **18** and a bearing **19** incorporated in the section element itself.

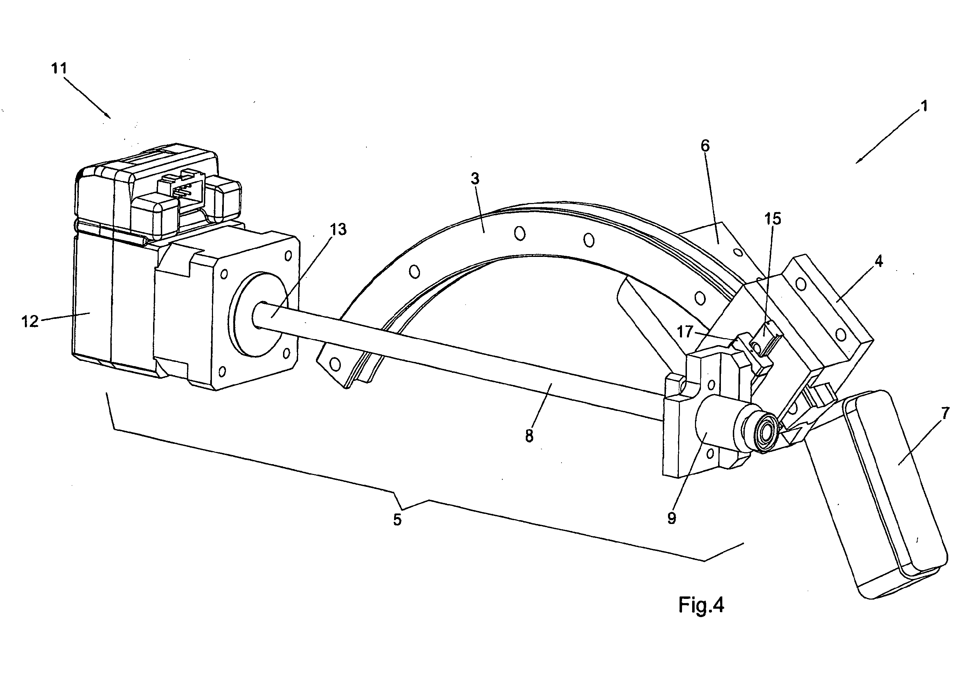

Said composition allows the slit **16** to rotate with respect to the drive element **9** with which it is coupled, so as to follow the orientation that the supporting carriage **4** assumes during its movement along the curved guide **3**, as can be seen in Figures 2 and 4.

In a different application of the above mentioned embodiment, not described and not illustrated herein, the slit **16** can be made directly in the drive element **9** and instead of the linear guide **15** it is possible to provide a pin rotatingly associated with the supporting carriage **4**, so as to allow the rotation of the same supporting carriage **4** with respect to the drive element **9** at the same time as the linear translation of the pin inside the slit **16** and thus, consequently, the linear translation between the supporting carriage **4** and the drive element **9**.

Again, in an alternative embodiment the linear guide **15** may project from the drive element **9** and the slit **16** may be defined in the supporting carriage **4,** provided that said configuration allows the rotation together with the mutual translation of the two elements **4** and **9** considered above.

Regarding the driving bar **8**, as shown in Figure 2, according to the preferred embodiment of the invention it is a screw **20** and the drive element **9** is the relative nut screw **21.**

Preferably but not necessarily, the coupling of the screw **20** and the nut screw **21** is made possible through a system with recirculating balls.

However, in different embodiments of the invention the driving bar **8** and the drive element **9** may be configured in a different manner, provided that the latter can slide along the driving bar **8.**

As already mentioned, according to an important variant of the preferred embodiment described up to now, not illustrated in the figures, it is possible to provide two supporting carriages, each one of which can move along a limited section of the curved guide **3** and each one of which is suited to support one of the two source **6** and detector **7** units.

In order to allow the independent movement of said two supporting carriages along the curved guide **3**, the driving unit **5** should include two driving bars arranged along two distinct chords of the same curved guide **3.**

In particular, the two driving bars **8** can be arranged on the same side with respect to the curved guide **3**, or alternatively they can be arranged on opposite sides of the same curved guide **3.**

Furthermore, each driving bar **8** would be operatively coupled with a drive element **9**, in turn associated with one of the two supporting carriages **4** through the above mentioned articulation means **10**, so as to allow the independent movement of the former along the curved guide **3**, as explained with reference to the preferred embodiment of the invention described above. From a functional point of view, in this alternative solution the X-ray source unit **6** and the detector unit **7** would have the possibility to move around the sample at different speeds and with different angles of incidence.

Finally, according to the preferred embodiment of the invention, the X-ray diffractometer **1** of the invention also comprises precision adjustment means, not represented in the figures, that make it possible to position the same X-ray diffractometer **1** precisely with respect to the sample to be analysed.

In particular, said adjustment means comprise a laser pointer aligned with the X-ray source unit **6,** so that it is possible to visually verify the incidence point of the X-rays on the sample to be analysed.

In order to be able to modify with precision the position of the X-ray diffractometer **1** of the invention, in general, and of the source unit **6** and the detector unit **7**, in particular, the precision adjustment means comprise a micrometer.

Finally, preferably but not necessarily, in the preferred embodiment the precision adjustment means also comprise a spirit level 360°, with which it is possible to verify the inclination of the X-ray diffractometer **1** with respect to the sample to be analysed in the different directions.

However, it is not excluded that the above mentioned precision adjustment means comprise other precision elements, provided that these allow the diffractometer to be positioned precisely with respect to the sample and provided that they belong to the known art.

In practice, the technician in charge with the determination of the residual stress in a sample subjected to analysis which cannot be removed from its normal operating position transports the X-ray diffractometer **1** of the invention to the site and arranges it in proximity to the point where the analysis has to be performed, fixing it stably through suitable coupling means, like hydraulic arms or magnetic means.

In a successive second stage the technician precisely defines the position of the X-ray diffractometer **1** with respect to the point to be analysed.

In particular the technician, using said precision adjustment means **22**, precisely centers the point of incidence of the X-rays with respect to the sample to be analysed.

Once the mechanical precision adjustment of the X-ray diffractometer **1** of the invention has been carried out, the technician can start analysing the sample, activating the X-ray diffractometer **1** of the invention, whose operating modes have been described above respectively for the first and second embodiment. On the basis of the above, it is clear that the diffractometer that is the subject of the invention achieves all the set objects.

In particular, the invention achieves the object to provide a portable diffractometer whose overall dimensions and weight are reduced compared to the diffractometers of the known art, so that it can be used for on-site applications even in conditions of limited space.

A further object achieved by the invention is to provide a portable X-ray diffractometer ensuring higher precision and repeatability of the movements of the various components compared to the diffractometers of the known art. Consequently, the invention also achieves the object to provide an X-ray diffractometer that makes it possible to obtain measurements that are much more precise and constant compared to those obtained with the diffractometers of the known art.

Finally, the invention also achieves the object to provide an X-ray diffractometer essentially comprising components normally available and easy to find on the market, so as to reduce its costs.

## Claims

1. X-ray diffractometer (1) suited to determine the residual stresses in polycrystalline materials subjected to analysis, of the type comprising:
- a supporting structure (2) comprising a curved guide (3) essentially in the shape of an arc of a circle, along which at least one supporting carriage (4) is slidingly constrained;
- a driving unit (5) suited to set said supporting carriage (4) moving along said curved guide (3);
- an X-ray source unit (6) and a detector unit (7) for detecting said X-ray diffracted by said sample, connected to said at least one supporting carriage (4) so that they can rotate around the point at the height of which said sample is located,
**characterized in that** said driving unit (5) comprises:
- at least one driving bar (8) arranged essentially between the opposite ends (31, 32) of a chord of said curved guide (3) and defining a longitudinal axis (x) that lies on a plane (π) essentially parallel to the plane (p) defined by said curved guide (3);
- a drive element (9) movable along said driving bar (8) and operatively associated with said supporting carriage (4) through articulation means (10) in order to allow the linear motion of said drive element (9) to be transformed in the curved motion of said supporting carriage (4) determined by said curved guide (3);
- one or more power means (11) associated with a first end of said at least one driving bar (8) in order to set said drive element (9) moving according to said longitudinal axis (x).

2. X-ray diffractometer (1) according to claim 1), **characterized in that** said articulation means (10) include rotation-translation means for the translation and simultaneous rotation of said supporting carriage (4) with respect to said drive element (9), said rotation and said translation allowing said supporting carriage (4) to be moved along said curved guide (3) when said drive element (9) is set moving along said longitudinal axis (x) through said power means (11).

3. X-ray diffractometer (1) according to claim 2), **characterized in that** said rotation-translation means include slide means (14) comprising a linear guide (15) operatively associated with a slit (16).

4. X-ray diffractometer (1) according to claim 3), **characterized in that** said linear guide (15) projects from said supporting carriage (4) and said slit (16) is defined in said drive element (9).

5. X-ray diffractometer (1) according to claim 4), **characterized in that** said slit (16) is rotatingly associated with said drive element (9) through a pin (18) coupled with a bearing (19).

6. X-ray diffractometer (1) according to claim 3), **characterized in that** said linear guide (15) projects from said drive element (9) and said slit (16) is defined in said supporting carriage (4).

7. X-ray diffractometer (1) according to any of the preceding claims, **characterized in that** said at least one supporting carriage (4) is a single supporting carriage suited to move essentially over the entire extension of said curved guide (3) and suited to stably support said X-ray source unit (6) and said detector unit (7) arranged according to a defined angle of incidence with respect to each other, and **in that** said at least one driving bar (8) is a single driving bar on whose longitudinal axis (x) said drive element (9) is suited to move, the latter being operatively associated with said supporting carriage (4).

8. X-ray diffractometer (1) according to any of the claims from 1) to 6), **characterized in that** said at least one supporting carriage (4) consists of two supporting carriages, each one of which is suited to move independently along a defined portion of said curved guide (3) and each one of which is connected to one between said X-ray source unit (6) and said detector unit (7), and **in that** said at least one driving bar (8) consists of two driving bars defining longitudinal axes parallel to each other and each one of which is suited to allow the movement of a drive element (9) suited to independently drive said two supporting carriages (4) through said articulation means (10), so that said X-ray source unit (6) and said detector unit (7) can be mutually arranged so as to form variable angles of incidence.

9. X-ray diffractometer (1) according to any of the preceding claims, **characterized in that** said driving bar (8) is a screw (20) and said drive element (9) is a nut screw (21).

10. X-ray diffractometer (1) according to claim 9), **characterized in that** said screw (20) and said nut screw (21) operatively cooperate with each other through recirculating balls.

11. X-ray diffractometer (1) according to any of the preceding claims, **characterized in that** said curved guide (3) and said at least one supporting carriage (4) operatively cooperate with each other through recirculating balls.

12. X-ray diffractometer (1) according to any of the preceding claims, **characterized in that** it is of the portable type.

## Patentansprüche

1. Röntgendiffraktometer (1) für die Bestimmung der Restspannungen in Analysen unterzogenen, polykristallinen Materialien, von dem Typ, der Folgendes umfasst:
- eine Tragstruktur (2) mit einer im Wesentlichen kreisbogenförmigen, gekrümmten Führung (3), entlang derer wenigstens ein Tragschlitten (4) gleitend verbunden ist;
- eine Antriebseinheit (5), die geeignet ist, den besagten Tragschlitten (4) an der besagten, gekrümmten Führung (3) entlang zu bewegen;
- eine Röntgenquelleneinheit (6) und eine Detektoreinheit (7) zur Detektierung der besagten, durch die besagte Probe diffraktierten Röntgenstrahlen, welche mit dem besagten, wenigstens einen Tragschlitten (4) verbunden sind, so dass sie um den Punkt rotieren können, in dessen Höhe die besagte Probe angebracht ist,
**dadurch gekennzeichnet, dass** die besagte Antriebseinheit (5) Folgendes umfasst:
- wenigstens eine Antriebsstange (8), die im Wesentlichen zwischen den einander gegenüberliegenden Enden (31, 32) eines Gurts der besagten, gekrümmten Führung (3) angeordnet ist und eine Längsachse (x) definiert, welche auf einer Ebene (π) liegt, die im Wesentlichen parallel zur durch die besagte, gekrümmte Führung (3) definierten Ebene (p) liegt;
- ein Antriebselement (9), das entlang der besagten Antriebsstange (8) bewegbar und über Gelenkmittel (10) operativ mit dem besagten Tragschlitten (4) verbunden ist, um die Umwandlung der linearen Bewegung des besagten Antriebselements (9) in die durch die besagte, gekrümmte Führung (3) bedingte, gekrümmte Bewegung des besagten Tragschlittens (4) zu erlauben;
- ein oder mehrere Antriebsmittel (11), die mit einem ersten Ende der besagten, wenigstens einen Antriebsstange (8) verbunden sind, um das besagte Antriebselement (9) entlang der besagten Längsachse (x) zu bewegen.

2. Röntgendiffraktometer (1) gemäß Patentanspruch 1), **dadurch gekennzeichnet, dass** die besagten Gelenkmittel (10) Rotations- und Translationsmittel für die Verfahrung und gleichzeitige Drehung des besagten Tragschlittens (4) bezüglich des besagten Antriebselements (9) umfassen, wobei die besagte Rotation und die besagte Translation die Bewegung des besagten Tragschlittens (4) entlang der besagten gekrümmten Führung (3) erlauben, wenn das besagte Antriebselement (9) durch die besagten Antriebsmittel (11) entlang der besagten Längsachse (x) in Bewegung versetzt wird.

3. Röntgendiffraktometer (1) gemäß Patentanspruch 2), **dadurch gekennzeichnet, dass** die besagten Rotations- und Translationsmittel Schiebemittel (14) umfassen, die eine operativ mit einem Schlitz (16) verbundene, lineare Führung (15) aufweisen.

4. Röntgendiffraktometer (1) gemäß Patentanspruch 3), **dadurch gekennzeichnet, dass** die besagte lineare Führung (15) aus dem besagten Tragschlitten (4) hervorsteht, und dass der besagte Schlitz (16) in dem besagten Antriebselement (9) definiert ist.

5. Röntgendiffraktometer (1) gemäß Patentanspruch 4), **dadurch gekennzeichnet, dass** der besagte Schlitz (16) über einen mit einem Lager (19) gekoppelten Zapfen (18) drehend mit dem besagten Antriebselement (9) verbunden ist.

6. Röntgendiffraktometer (1) gemäß Patentanspruch 3), **dadurch gekennzeichnet, dass** die besagte lineare Führung (15) aus dem besagten Antriebselement (9) hervorsteht, und dass der besagte Schlitz (16) in dem besagten Tragschlitten (4) definiert ist.

7. Röntgendiffraktometer (1) gemäß eines jeden der vorstehenden Patentansprüche, **dadurch gekennzeichnet, dass** der besagte, wenigstens eine Tragschlitten (4) ein einzelner Tragschlitten ist, der geeignet ist, sich im Wesentlichen über die gesamte Länge der besagten, gekrümmten Führung (3) zu bewegen, und geeignet ist, stabil die besagte Röntgenquelleneinheit (6) sowie die besagte Detektoreinheit (7) zu tragen, die in einem bestimmten Inzidenzwinkel zueinander angeordnet sind, und **dadurch gekennzeichnet, dass** die besagte, wenigstens eine Antriebsstange (8) eine einzelne Antriebsstange ist, über deren Längsachse (x) sich das besagte Antriebselement (9) bewegen kann, wobei Letzteres operativ mit dem besagten Tragschlitten (4) verbunden ist.

8. Röntgendiffraktometer (1) gemäß eines jeden der Patentansprüche von 1) bis 6), **dadurch gekennzeichnet, dass** der besagte, wenigstens eine Tragschlitten (4) aus zwei Tragschlitten besteht, von denen jeder geeignet ist, sich unabhängig entlang eines definierten Abschnitts der besagten, gekrümmten Führung (3) zu bewegen, und von denen jeder entweder mit der Röntgenquelleneinheit (6) oder mit der Detektoreinheit (7) verbunden ist, und **dadurch gekennzeichnet, dass** die besagte, wenigstens eine Antriebsstange (8) aus zwei Antriebsstangen besteht, die parallel zueinander stehende Längsachsen definieren und von denen jede geeignet ist, die Bewegung eines Antriebselements (9) zu erlauben, das geeignet ist, unabhängig die besagten zwei Tragschlitten (4) über die besagten Gelenkmittel (10) anzutreiben, so dass die besagte Röntgenquelleneinheit (6) und die besagte Detektoreinheit (7) wechselseitig mit variablen Inzidenzwinkeln angeordnet werden können.

9. Röntgendiffraktometer (1) gemäß eines jeden der vorstehenden Patentansprüche, **dadurch gekennzeichnet, dass** die besagte Antriebsstange (8) eine Schraube (20) ist, und dass das besagte Antriebselement (9) eine Mutter (21) ist.

10. Röntgendiffraktometer (1) gemäß Patentanspruch 9), **dadurch gekennzeichnet, dass** die besagte Schraube (20) und die besagte Mutter (21) operativ über Umlaufkugeln zusammenwirken.

11. Röntgendiffraktometer (1) gemäß eines jeden der vorstehenden Patentansprüche, **dadurch gekennzeichnet, dass** die besagte, gekrümmte Führung (3) und der besagte, wenigstens eine Tragschlitten (4) operativ über Umlaufkugeln zusammenwirken.

12. Röntgendiffraktometer (1) gemäß eines jeden der vorstehenden Patentansprüche, **dadurch gekennzeichnet, dass** er vom tragbaren Typ ist.

## Revendications

1. Diffractomètre à rayons X (1) indiqué pour la détermination des tensions résiduelles dans les matériels polycrystallins soumis à analyse, du type comprenant:
- une structure de support (2) comprenant un guidage courbé (3) essentiellement en forme d'un arc d'un cercle le long duquel au moins un chariot de support (4) est lié de manière coulissante;
- un groupe de manutention (5) apte à mettre en mouvement ledit chariot de support (4) le long dudit guidage courbé (3);
- un groupe émetteur (6) de rayons X et un groupe détecteur (7) desdits rayons X diffractés par ledit échantillon, reliés audit au moins un chariot de support (4) de façon à ce qu'ils puissent tourner autour du point au niveau duquel ledit échantillon est disposé,
**caractérisé en ce que** ledit groupe de manutention (5) comprend:
- au moins une barre motrice (8) disposée essentiellement entre les extrémités opposées (31, 32) d'une corde dudit guidage courbé (3) et définissant un axe longitudinal (x) qui se trouve sur un plan (π) essentiellement parallèle au plan (p) défini par ledit guidage courbé (3);
- un élément d'entraînement (9) mobile le long de ladite barre motrice (8) et opérationnellement associé audit chariot de support (4) par des moyens d'articulation (10) afin de consentir la transformation du mouvement linéaire dudit élément d'entraînement (9) dans le mouvement courbé dudit chariot de support (4) déterminé par ledit guidage courbé (3);
- un ou plusieurs moyens de motorisation (11) associés à une première extrémité de ladite au moins une barre motrice (8) de façon à mettre en mouvement ledit élément d'entraînement (9) selon ledit axe longitudinal (x).

2. Diffractomètre à rayons X (1) selon la revendication 1), **caractérisé en ce que** lesdits moyens d'articulation (10) prévoient des moyens de rotation-translation pour la translation et la rotation simultanée dudit chariot de support (4) par rapport audit élément d'entraînement (9), ladite rotation et ladite translation permettant le déplacement dudit chariot de support (4) le long dudit guidage courbé (3) quand ledit élément d'entraînement (9) est mis en mouvement le long dudit axe longitudinal (x) par lesdits moyens de motorisation (11).

3. Diffractomètre à rayons X (1) selon la revendication 2), **caractérisé en ce que** lesdits moyens de rotation et de translation prévoient des moyens de coulissement (14) comprenant un guidage linéaire (15) opérationnellement associé à une fente (16).

4. Diffractomètre à rayons X (1) selon la revendication 3), **caractérisé en ce que** ledit guidage linéaire (15) est saillant dudit chariot de support (4) et ladite fente (16) est définie sur ledit élément d'entraînement (9).

5. Diffractomètre à rayons X (1) selon la revendication 4), **caractérisé en ce que** ladite fente (16) est associée de manière pivotante audit élément d'entraînement (9) par un pivot (18) accouplé à un roulement (19).

6. Diffractomètre à rayons X (1) selon la revendication 3), **caractérisé en ce que** ledit guidage linéaire (15) est saillant dudit élément d'entraînement (9) et ladite fente (16) est définie sur ledit chariot de support (4).

7. Diffractomètre à rayons X (1) selon l'une quelconque des revendications précédentes, **caractérisé en ce que** ledit au moins un chariot de support (4) est un chariot de support unique indiqué pour se déplacer essentiellement pour toute l'extension dudit guidage courbé (3) et indiqué pour soutenir stablement ledit groupe émetteur (6) de rayons X et ledit groupe détecteur (7) disposés entre eux selon un angle d'incidence défini, et **en ce que** ladite au moins une barre motrice (8) est une barre motrice unique sur l'axe longitudinal (x) de laquelle ledit élément d'entraînement (9) est apte à se déplacer, celui-ci étant opérationnellement associé audit chariot de support (4).

8. Diffractomètre à rayons X (1) selon l'une quelconque des revendications de 1) à 6), **caractérisé en ce que** ledit au moins un chariot de support (4) consiste de deux chariots de support, chacun desquels est apte à se déplacer indépendamment le long d'une portion définie dudit guidage courbé (3) et à chacun desquels est relié un entre ledit groupe émetteur (6) de rayons X et ledit groupe détecteur (7), et **en ce que** ladite au moins une barre motrice (8) consiste de deux barres motrices définissant des axes longitudinaux parallèles entre eux et sur chacune desquelles un élément d'entraînement (9) est apte à se déplacer pour l'entraînement de manière indépendante desdits deux chariots de support (4) par des moyens d'articulation (10), de façon à ce que ledit groupe émetteur (6) de rayons X et ledit groupe détecteur (7) peuvent être disposés entre eux de manière à former des angles d'incidence variables.

9. Diffractomètre à rayons X (1) selon l'une quelconque des revendications précédentes, **caractérisé en ce que** ladite barre motrice (8) est une vis (20) et ledit élément d'entraînement (9) est une vis mère (21).

10. Diffractomètre à rayons X (1) selon la revendication 9), **caractérisé en ce que** ladite vis (20) et ladite vis mère (21) coopèrent opérationnellement entre elles par des billes de recirculation.

11. Diffractomètre à rayons X (1) selon l'une quelconque des revendications précédentes, **caractérisé en ce que** ledit guidage courbé (3) et ledit au moins un chariot de support (4) coopèrent opérationnellement entre eux par des billes de recirculation.

12. Diffractomètre à rayons X (1) selon l'une quelconque des revendications précédentes, **caractérisé en ce qu'**il est du type portatif.
